# EUROPÄISCHE PATENTSCHRIFT

(11) **EP 1 197 854 B1**
(45) Veröffentlichungstag und Bekanntmachung des Hinweises auf die Patenterteilung: **07.04.2010**
(21) Anmeldenummer: 01121190.1
(22) Anmeldetag: 04.09.2001
(51) Int. Cl.: G06F 9/445

(54) **Verfahren zum Starten einer Datenverarbeitungsanlage sowie zugehörige Komponenten**
Method for starting a data processing apparatus and corresponding components
Méthode pour démarrer un appareil de traitement de données et composants correspondants

(30) Priorität: 12.10.2000 DE 10050604
(43) Veröffentlichungstag der Anmeldung: 17.04.2002
(73) Patentinhaber: SIEMENS AKTIENGESELLSCHAFT, 80333 München (DE)
(72) Erfinder: Bautz, Gerd, 59192 Bergkamen (DE); Coen, Guy, Dr., 9300 Aalst (BE); Moschner, Jürgen, 44369 Dortmund (DE)
(74) Vertreter: Fritzsche, Thomas

(56) Entgegenhaltungen:
- EP-A- 0 959 405
- US-A- 5 793 943
- US-A- 5 951 685
- RUBINI A: "Kernel Korner: Booting the Kernel" LINUX JOURNAL, [Online] Bd. 1997, Nr. 38, Juni 1997 (1997-06), XP002263835 ISSN: 1075-3583 Gefunden im Internet: <URL:http://portal.acm.org/citation.cfm?id =326871&jmp=indexterms&dl=GUIDE&dl=ACM> [gefunden am 2003-12-02]

## Beschreibung

Die Erfindung betrifft ein Verfahren, bei dem in einer Urlade-Speichereinheit ein Urladeprogramm gespeichert ist. Ein Prozessor führt die Programmbefehle des Urladeprogramms aus und steuert dabei einen Übertragungsvorgang. Während des Übertragungsvorgangs werden Programmbefehle aus einer Nachlade-Speichereinheit in die Arbeitsspeichereinheit übertragen. Nach dem Übertragungsvorgang beginnt der Prozessor mit der Ausführung der während des Übertragungsvorgangs im Arbeitsspeicher gespeicherten Befehle.

Verfahren zum Starten einer Datenverarbeitungsanlage werden auch als Urladeverfahren oder als Bootverfahren bezeichnet. Bei bekannten Verfahren, wie sie z.B. bei Personalcomputern üblich sind, wird das Urladeprogramm in einem ROM (Read Only Memory) gespeichert. Das Urladeprogramm ist Bestandteil des sogenannten BIOS (Basic Input Output System). Der ROM-Speicher gestattet einen parallelen Zugriff auf die Bitpositionen eines Datenwortes mit mehreren Bits. Der Prozessor der Datenverarbeitungsanlage führt beim Startvorgang die Befehle des im ROM gespeicherten Urladeprogramms aus. Dabei greift er lesend auf die ROM-Speichereinheit zu. Beim Startvorgang wird das Betriebssystem aus der Nachlade-Speichereinheit in die Arbeitsspeichereinheit kopiert.

Aus der US-Patentschrift US 5,951,685 ist zur Reduzierung der Kosten die Verwendung eines seriellen ROMs als Urlade-Speichereinheit bekannt. Die im seriellen ROM gespeicherten Programmbefehle werden dabei für eine Ausführung durch einen Prozessor während des Bootvorgangs in ein sogenanntes Base Memory kopiert.

Die Nachlade-Speichereinheit ist eine Speichereinheit, die auch nach dem Ausschalten der Betriebsspannung Daten speichert, d.h. eine sogenannte nicht flüchtige Speichereinheit. Als Nachlade-Speichereinheit wird z.B. eine sogenannte Festplatte eingesetzt, auf der mehrere hundert Megabyte oder mehre Gigabyte gespeichert sind.

Die Arbeitsspeichereinheit ist eine Speichereinheit, die nach dem Ausschalten der Betriebsspannung die in ihr gespeicherten Daten verliert, sogenannte flüchtige Speichereinheit. Als Arbeitsspeichereinheit werden RAM (Random Access Memory) eingesetzt. Weil der Arbeitsspeichereinheit beim Ausschalten die in ihr gespeicherten Daten verliert, muss nach dem Einschalten das Betriebssystem erneut in die Arbeitsspeichereinheit übertragen werden. Die Arbeitsspeichereinheit hat außerdem eine kürzere Zugriffszeit als die Nachlade-Speichereinheit. Für eine schnelle Arbeitsweise der Datenverarbeitungsanlage ist demzufolge ebenfalls das Übertragen des Betriebssystems aus der Nachlade-Speichereinheit in die Arbeitsspeichereinheit erforderlich.

Es ist Aufgabe der Erfindung, zum Starten einer Datenverarbeitungsanlage ein einfaches Verfahren anzugeben, das mit verringertem Bauelementeaufwand ausgeführt werden kann. Außerdem sollen eine zugehörige Datenverarbeitungsanlage und eine zugehörige Steuereinheit angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass eine Speichereinheit für einen parallelen Zugriff auf die gespeicherten Daten bzw. auf zu speichernde Daten eine Vielzahl von Anschlüssen haben muss. Dadurch wird das Bauelement vergleichsweise groß und nimmt auf einer Leiterplatte oder auf einem Chip verhältnismäßig viel Bauraum ein. Eine Speichereinheit mit seriellem Zugriff auf die Daten ist dagegen einfacher aufgebaut und benötigt weniger Anschlüsse, beispielsweise nur zwei Spannungsanschlüsse, einen Steueranschluss und einen Anschluss zur Datenein- bzw. -ausgabe. Dadurch lassen sich serielle Speichereinheiten mit weniger Aufwand herstellen als Speichereinheiten mit parallelem Zugriff. Aufgrund der verminderten Anzahl von Anschlüssen ist auch der benötigte Bauraum kleiner.

Beim erfindungsgemäßen Verfahren ist deshalb die Urlade-Speichereinheit und/oder die Nachlade-Speichereinheit eine Speichereinheit mit seriellem Zugriff oder eine Speichereinheit, die zum Lesen eines Programmbefehls mehrere Lesevorgänge erfordert. Durch eine solche Vorgehensweise lassen sich für die Speichereinheiten einfach herzustellende Speichereinheiten einsetzen, die einen geringeren Herstellungspreis haben. Im folgenden bezieht sich serieller Zugriff auch auf einen Mehrfachzugriff zum Lesen eines Programmbefehls. Ist die Nachlade-Speichereinheit eine Speichereinheit mit seriellem Zugriff, so lässt sich zum Speichern des Urladeprogramms, wie bisher üblich, eine Speichereinheit mit parallelem Zugriff einsetzen. Der Aufwand an einzusetzenden Bauelementen verringert sich jedoch nochmals, wenn sowohl die Urlade-Speichereinheit als auch die Nachlade-Speichereinheit Speichereinheiten mit seriellem Zugriff sind.

Andererseits lässt sich auch nur für die Urlade-Speichereinheit eine Speichereinheit mit seriellem Zugriff einsetzen, um die erfindungsgemäßen Wirkungen zu nutzen. Als Nachlade-Speichereinheit lässt sich wie bisher eine Speichereinheit mit parallelem Zugriff einsetzen, z.B. eine Festplatte.

Bei einer Weiterbildung des erfindungsgemäßen Verfahrens wird als Urlade-Speichereinheit eine Speichereinheit mit seriellem Zugriff eingesetzt. Ein Prozessor kann somit das in der Urlade-Speichereinheit gespeicherte Programm nicht direkt ausführen. Bei der Weiterbildung werden deshalb in einem Urlade-Übertragungsvorgang die Programmbefehle des Urladeprogramms aus der Urlade-Speichereinheit in die Arbeitsspeichereinheit mit Hilfe einer Steuerschaltung übertragen. Nach dem Urlade-Übertragungsvorgang beginnt der Prozessor mit dem Ausführen der in der Arbeitsspeichereinheit während des Urlade-Übertragungsvorgangs übertragenen Programmbefehle und somit mit dem Nachlade-Übertragungsvorgang.

Bei einer nächsten Weiterbildung ist die Steuereinheit eine binäre Steuereinheit, bei der die Steuerfunktion durch die Verschaltung von Logikschaltungen vorgegeben ist. Die Steuerfunktion wird somit nicht durch ein Programm vorgegeben, das durch einen Prozessor ausgeführt werden muss. Zur Erbringung der Funktionen der Steuereinheit werden anwenderspezifische Schaltkreise mit hoher Integrationsdichte eingesetzt. Bei sogenannten ASIC's (AnwenderSpezifischer IC) und FPGA's werden logische Schaltungselemente des Schaltkreises in einem Programmiervorgang nach den Vorgaben des Anwenders verschaltet. Als anwenderspezifische Schaltkreise werden sogenannte PLD (Programmable Logic Device), PLA (Programmable Logic Array), PAL (Programmable Array Logic) eingesetzt. Die Steuereinheit ist im Vergleich zu einem Mikroprozessor jedoch einfach aufgebaut.

Bei einer nächsten Weiterbildung wird der Prozessor während des Urlade-Vorganges durch die Steuereinheit in einem Zustand gehalten, in dem er keine Befehle ausführt. Dies lässt sich durch das dauerhafte Anlegen eines Rücksetzsignals am Rücksetzeingang des Prozessors erreichen. Eine andere Möglichkeit ist eine Unterbrechung der Takterzeugung für den Prozessor. Bei der Weiterbildung gibt die Steuereinheit das Ausführen von Befehlen nach Abschluss des Urlade-Übertragungsvorgangs frei. Die Freigabe lässt sich durch Umschalten des Rücksetzsignals durchführen.

Bei einer nächsten Weiterbildung ist die Urlade-Speichereinheit eine nicht flüchtige Speichereinheit. Wie bereits erwähnt, lässt sich als Urlade-Speichereinheit eine serielle Speichereinheit einsetzen, d.h. eine Speichereinheit, bei der die Bitpositionen für einen Programmbefehl Bit für Bit nacheinander ausgegeben werden. Die Speicherkapazität der Urlade-Speichereinheit wird bei einer Ausgestaltung wesentlich kleiner als die Speicherkapazität der Nachlade-Speichereinheit gewählt. So liegt die Speicherkapazität der Urlade-Speichereinheit im Kilobyte-Bereich. Geeignet als Urlade-Speichereinheit sind EEPROM (Electrical Eraseable Programmable Read Only Memory) mit seriellem Zugriff, solche Schaltkreise arbeiten beispielsweise mit einem IIC-Bussystem.

Bei einer nächsten Weiterbildung ist die Arbeitsspeichereinheit eine flüchtige Speichereinheit. Die Arbeitsspeichereinheit ermöglicht eine gleichzeitige Eingabe bzw. Ausgabe mehrerer Bitpositionen eines Programmbefehls. Somit kann ein Prozessor direkt auf die Arbeitsspeichereinheit zugreifen. Als Arbeitsspeichereinheit lässt sich ein RAM (Random Access Memory) einsetzen. Synchron arbeitende dynamische RAM's ermöglichen kurze Zugriffszeiten.

Bei einer nächsten Weiterbildung ist die Nachlade-Speichereinheit eine nicht flüchtige Speichereinheit. Es lassen sich Nachlade-Speichereinheiten einsetzen, die die gespeicherten Programmbefehle seriell ausgeben. Die Speicherkapazität der Nachlade-Speichereinheit liegt bei einer Weiterbildung im Megabyte-Bereich. In der Nachlade-Speichereinheit lassen sich somit Betriebssysteme mit mehreren hundert Megabyte speichern. Bei einer Ausgestaltung wird als Nachlade-Speichereinheit eine sogenannte Multimediakarte eingesetzt. Zum Zugriff auf solche Karten muss ein Protokoll eingehalten werden, das der Prozessor nicht beherrscht und das spezielle Steuerbefehle verwendet. Die Steuerbefehle bestehen aus Datenworten, deren Bits den auszuführenden Befehl festlegen. Die Befehle wurden von der MMC-Vereinigung (Multi Media Card) standardisiert. Nähere Informationen zu solchen Karten sind unter www.scandisc.com zu erhalten.

Es werden jedoch auch eine Kompakt-Flash-Karte und/oder eine Smartmediakarte und/oder eine Memory-Stick-Speichereinheit (z.B. der Firma Sony) eingesetzt. Bei einigen dieser Speichermedien werden z.B. vier Bit parallel ausgegeben, so dass zum Zugriff auf einen Programmbefehl mit mehr als der jeweils parallel ausgegebenen Bitpositionen mehrere Leseoperationen erforderlich sind.

Bei einer nächsten Weiterbildung enthält die Nachlade-Speichereinheit ein Register, in dem die Startadresse eines derzeit lesbaren Speicherbereichs der Nachlade-Speichereinheit vermerkt ist. Ein anderer Speicherbereich, dessen Startadresse momentan nicht in dem Register vermerkt ist, kann nicht gelesen werden. Beim Ausführen des Urladeprogramms wird der Nachlade-Übertragungsvorgang abhängig von der Startadresse ausgeführt, d.h. es wird nur auf die im lesbaren Speicherbereich gespeicherten Datenworte zugegriffen. Durch das Verwenden von beispielsweise Multimediakarten mit solchen Registern lässt sich auf einfache Art, nämlich durch Eintragen einer anderen Startadresse im Register, ein anderer Speicherbereich festlegen.

Bei einer Ausgestaltung wird die einfache Auswahlmöglichkeit von Speicherbereichen der Nachlade-Speichereinheit ausgenutzt, um Programmbefehle zu aktualisieren. Eine neue Version der Programmbefehle lässt sich im aktuell nicht lesbaren Speicherbereich speichern. Ist während des Speichervorgangs ein Neustart der Datenverarbeitungsanlage erforderlich, so lässt sich der Neustart unabhängig vom Stand des Speichers der neuen Version ausführen. Die alte Version ist nämlich noch vollständig in der Nachlade-Speichereinheit vorhanden. Erst nach dem vollständigen Übertragen der neuen Version der Programmbefehle in die Nachlade-Speichereinheit wird die im Register vermerkte Adresse auf den anderen Speicherbereich eingestellt. Anschließend wird ein neuer Startvorgang eingeleitet. Treten während dieses Startvorgangs Fehler auf, so wird im Register wieder die alte Startadresse eingetragen. Anschließend wird erneut gestartet. In der Speichereinheit wird dann für den neuen Startvorgang auf die bisher eingesetzten und bewährten Programmbefehle zurückgegriffen. Durch diese Maßnahme lässt sich eine längerer Ausfall der Datenverarbeitungsanlage beim Übergang zu einer neuen Version der Programmbefehle vermeiden. Dies ist insbesondere bei Telekommunikationsanlagen oder bei Vermittlungsstellen erforderlich, weil an deren Ausfallsicherheit hohe Anforderungen gestellt werden.

Bei einer nächsten Weiterbildung wird mindestens einmal beim Ausführen der in die Arbeitsspeichereinheit übertragenen Programmbefehle zumindest ein Teil dieser Programmbefehle aus einem Ursprungsbereich in der Arbeitsspeichereinheit in einen anderen Bereich der Arbeitsspeichereinheit kopiert. Durch einen Sprungbefehl lässt sich erreichen, dass der Prozessor mit dem Ausführen der in den anderen Speicherbereich gespeicherten Programmbefehle beginnt. Aus der Nachlade-Speichereinheit zu übertragende Befehle werden dann in den Ursprungsbereich gespeichert und überschreiben dort die zuvor gespeicherten Programmbefehle. Nach dem aktuellen Übertragungsvorgang wird dann der Prozessor in einen definierten Anfangszustand geschaltet, z.B. mit Hilfe der Steuereinheit. Durch diese Maßnahme wird erreicht, dass nach dem Abschluss des Übertragungsverfahrens oder nach dem Abschluss eines Teils des Übertragungsverfahrens auf einfache Art mit der Ausführung der während des Übertragungsverfahrens übertragenen Programmbefehle begonnen werden kann. Für die marktüblichen Prozessoren ist nämlich ein solcher definierter Anfangszustand vorgegeben. Beispielsweise wird dieser Anfangszustand beim Auftreten eines Rücksetzsignals eingenommen. Im Anfangszustand haben die Register des Prozessors vorgegebene Werte und die Befehlsausführung beginnt an einer vom Hersteller des Prozessors vorgegebenen Adresse. Aufwendige Maßnahmen zur Vorgabe von Registerinhalten und von Bearbeitungsbereichen lassen sich somit vermeiden.

Bei einer Weiterbildung des erfindungsgemäßen Verfahrens sind in der Nachlade-Speichereinheit Programmbefehle gemäß einem Komprimierungsverfahren gespeichert. Durch den Einsatz eines Komprimierungsverfahrens lässt sich der in der Nachlade-Speichereinheit benötigte Speicherplatz erheblich reduzieren. Beispielsweise wird nur noch weniger als ein Drittel des Speicherplatzes benötigt. Programmbefehle für die Durchführung des zugehörigen Dekomprimierungsverfahrens lassen sich in der Urlade-Speichereinheit oder in einem unkomprimierten Teil der Programmbefehle der Nachlade-Speichereinheit speichern. Beim Ausführen der Programmbefehle des Dekomprimierungsverfahrens werden die komprimierten Programmbefehle dekomprimiert.

Bei einer Weiterbildung wird nach dem Urlade-Übertragungsvorgang das Urladeprogramm innerhalb der Arbeitsspeichereinheit umkopiert. Anschließend wird das Umladeprogramm ausgeführt, wobei der Ursprungsbereich mit Programmbefehlen der Nachlade-Speichereinheit überschrieben wird. Anschließend wird der Prozessor zum zweiten Mal in einen definierten Zustand gesetzt. Daraufhin wird mit der Ausführung der zuvor aus dem Nachlade-Speicherbereich übertragenen Programmbefehle begonnen, z.B. mit der Ausführung des Betriebssystems.

Bei einer anderen Weiterbildung wird der Prozessor während des Neustarts dreimal in einen definierten Zustand gesetzt. Zunächst nach dem Urlade-Übertragungsvorgang, nach einem Hilfslade-Übertragungsvorgang, in welchem das Dekomprimierprogramm übertragen wird, und dann am Schluss des Nachlade-Übertragungsverfahrens zum Starten des Betriebssystems. Durch diese Vorgehensweise wird erreicht, dass auf einfache Art zwischen den einzelnen Stufen umgeschaltet werden kann.

Die Erfindung betrifft außerdem eine Datenverarbeitungsanlage mit mindestens einem Prozessor, einer Urlade-Speichereinheit, einer Nachlade-Speichereinheit und mit einer Arbeitsspeichereinheit. Die Urlade-Speichereinheit und/oder die Nachlade-Speichereinheit ist eine Speichereinheit mit seriellem Datenzugriff oder eine Speichereinheit, die zum Lesen eines Programmbefehls mehrere Lesevorgänge erfordert. Bei Weiterbildungen ist die Datenverarbeitungsanlage so aufgebaut, dass bei ihrem Betrieb das erfindungsgemäße Verfahren oder eine seiner Weiterbildungen ausgeführt wird. Damit gelten die oben genannten technischen Wirkungen auch für die Datenverarbeitungsanlage.

Weiterhin betrifft die Erfindung eine Schaltungsanordnung, z.B. einen anwenderspezifischen Schaltkreis (ASIC), die als Steuereinheit beim Durchführen eines Startvorgangs unter Eibeziehung einer serieller Speichereinheit benötigt wird. Bei einer Weiterbildung ist die Schaltungsanordnung so aufgebaut, dass bei ihrem Betrieb das erfindungsgemäße Verfahren oder eine seiner Weiterbildungen ausgeführt wird. Die oben genannten technischen Wirkungen gelten auch für die Schaltungsanordnung.

Außerdem betrifft die Erfindung die Verwendung einer Speichereinheit mit seriellem Zugriff als Speicher für Programmdaten in einem Startvorgang für eine Datenverarbeitungsanlage. Insbesondere werden Multimediakarten bzw. die anderen oben genannten Karten bzw. die Memory-Stick-Speichereinheit bisher nur zur Speicherung von Musikdaten oder Sprachdaten eingesetzt, nicht jedoch zur Speicherung von Programmdaten. Die oben genannten technischen Wirkungen gelten auch für die Verwendung der seriellen Speichereinheit.

Im Folgenden werden Weiterbildungen der Erfindung an Hand der beiliegenden Zeichnungen erläutert. Darin zeigen:
- Figur 1: für den Startvorgang einer Datenverarbeitungsanlage benötigte Schaltungseinheiten,
- Figur 2: ein Ablaufdiagramm mit Verfahrensschritten beim Neustart der Datenverarbeitungsanlage, und
- Figur 3: Speicherbereiche eines Nachladespeichers.

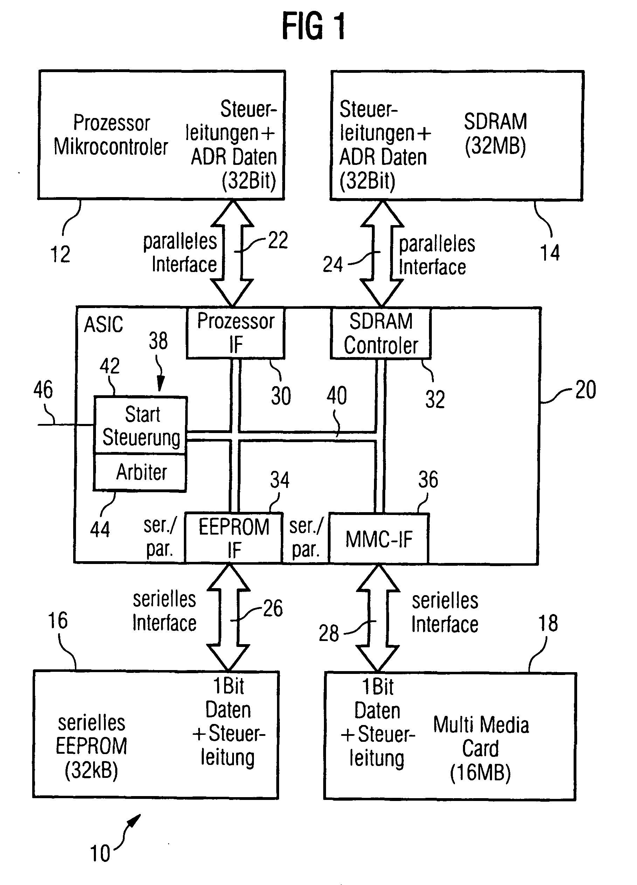

Figur 1 zeigt für den Startvorgang einer Datenverarbeitungsanlage 10 eingesetzte Schaltungseinheiten. Zu diesen Schaltungseinheiten gehören ein Prozessor 12, ein Arbeitsspeicher 14, ein Urladespeicher 16, ein Nachladespeicher 18 und ein ASIC 20. Der Prozessor 12 ist ein Mikrocontroller, z.B. vom Typ "Coldfire", wie er von der Firma MOTOROLA hergestellt wird. Ein Bussystem 22 verbindet den Prozessor 12 mit dem ASIC 20. Das Bussystem 22 enthält wie der Prozessor 12 zweiunddreißig Datenleitungen, mehrere Steuerleitungen und eine Vielzahl Adressleitungen.

Der Arbeitsspeicher 14 ist ein handelsüblicher SDRAM (Synchronous Dynamical Random Access Memory). Ein Bussystem 24 verbindet den Arbeitsspeicher 14 mit dem ASIC 20. Das Bussystem 24 enthält mehrere Datenleitungen, z.B. sechzehn Datenleitungen, mehrere Steuerleitungen und eine Vielzahl von Adressleitungen. Der Arbeitsspeicher 14 hat eine Speicherkapazität von z.B. 32 Megabyte.

Der Urladespeicher 16 ist ein serielles EEPROM mit einer Speicherkapazität von z.B. 32 Kilobyte, z.B. ein EEPROM der Firma PHILIPS mit IIC-Bussystem. Im Urladespeicher 16 befindet sich ein Urladeprogramm. Ein Bussystem 26 verbindet den Urladespeicher 16 mit dem ASIC 20. Das Bussystem 26 enthält nur eine Steuerleitung und eine Leitung zur Datenübertragung.

Der Nachladespeicher 18 enthält eine Multimediakarte mit einer Speicherkapazität von z.B. sechszehn Megabyte. Beispielsweise wird eine Multimediakarte der Firma SCANDISC eingesetzt. Im Nachladespeicher 18 ist das Betriebssystem gespeichert, z.B. das Betriebssystem WINDOWS. Der Nachladespeicher 18 ist mit dem ASIC 20 über ein serielles Interface 28 verbunden, das sieben Leitungen enthält, von denen eine Leitung zur Übertragung der Daten genutzt wird.

Der ASIC 20 enthält zum Anschluss des Bussystems 22 eine Prozessor-Schnittstelleneinheit 30, zum Anschluss des Bussystems 24 eine Controller-Einheit 32, zum Anschluss des IIC-Busses eine Urladespeicher-Schnittstelleneinheit 34 und zum Anschluss des seriellen Interfaces 28 eine Nachladespeicher-Schnittstelleneinheit 36. Weiterhin enthält der ASIC 20 eine Steuereinheit 38. Die Schnittstelleneinheiten 30, 34 und 36, die Controller-Einheit 32 und die Steuereinheit 38 sind im Innern des ASIC 20 über ein internes Bussystem 40 verbunden.

Die Prozessor-Schnittstelle 30 bildet die Schnittstelle zwischen dem Bussystem 22 und dem internen Bussystem 40. Das interne Bussystem entspricht im wesentlichen dem Bussystem 22, so dass in der Schnittstelleneinheit 30 nur kleine Signalanpassungen vorgenommen werden müssen.

Die Controller-Einheit 32 bildet die Schnittstelle zwischen dem Bussystem 24 und dem internen Bussystem. Außerdem dient die Controller-Einheit 32 zum Synchronisieren der Lese- und Schreibzugriffe auf den Arbeitsspeicher 14.

Die Urladespeicher-Schnittstelle 34 verbindet das IIC-Bussystem 26 mit dem internen Bussystem 40. Die Schnittstelleneinheit 34 enthält einen Seriell-Parallel-Datenwandler, der aus den vom Urladespeicher 16 kommenden Bits Datenworte erzeugt und an das interne Bussystem 40 weitergibt. Die Schnittstelleneinheit 34 enthält außerdem ein Register zum Speichern von über das interne Bussystem 40 übertragenen Datenworten. Abhängig vom Inhalt dieser Datenworte werden auf der Steuerleitung des Bussystems 26 Steuersignale zum Steuern des Lesevorgangs des Urladespeichers 16 erzeugt.

Die Schnittstelleneinheit 36 verbindet das serielle Interface 28 mit dem internen Bussystem. Die Schnittstelleneinheit 36 enthält einen Seriell-Parallel-Datenwandler, mit dem über das Interface 28 eintreffende Daten in Datenworte mit einer vorgegebenen Anzahl von Bitstellen umgewandelt werden, z.B. mit 32 Bitstellen.

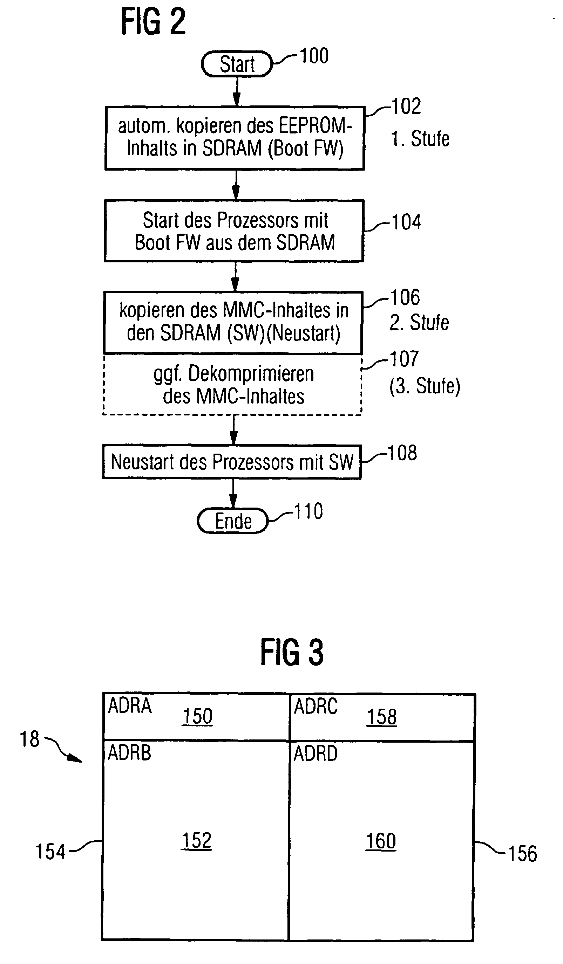

Die Steuereinheit 38 enthält eine Startsteuerung 42 und eine Buszugriffsschaltung 44. Die Startsteuerung 42 ist mit einer Rücksetzleitung 46 verbunden. Tritt ein Rücksetzsignal auf der Rücksetzleitung 46 auf, so beginnt die Startsteuerung 42 mit der Steuerung eines Startvorgangs, der unten an Hand der Figur 2 näher erläutert wird. Die Buszugriffsschaltung 44 gewährleistet, dass es beim Zugriff der an das interne Bussystem 40 angeschlossenen Einheiten keine Konflikte gibt.

Figur 2 zeigt ein Ablaufdiagramm mit Verfahrensschritten, die beim Neustart der Datenverarbeitungsanlage 10 ausgeführt werden, siehe auch Figur 1. Das Verfahren beginnt in einem Verfahrensschritt 100 mit dem Auftreten eines Rücksetzimpulses auf der Rücksetzleitung 46.

In einem folgenden Verfahrensschritt 102 veranlasst die Startsteuerung 42 über die Urladespeicher-Schnittstelleneinheit 34 automatisch das Kopieren der im Urladespeicher 16 gespeicherten Programmbefehle des Urladeprogramms in den Arbeitsspeicher 14. Die Programmbefehle werden im Arbeitsspeicher 14 beginnend ab der Anfangsadresse Null hin zu aufsteigenden Adresswerten gespeichert. Die erste Stufe des Neustarts der Datenverarbeitungsanlage 10 bildet einen Urlade-Übertragungsvorgang, bei dem ein im Urladespeicher 16 gespeichertes Urladeprogramm in den Arbeitsspeicher 14 übertragen wird.

In einem Verfahrensschritt 104 veranlasst die Startsteuerung 42 über das Deaktivieren des Rücksetzeingangs des Prozessors 12, dass der Prozessor 12 von einem Rücksetz-Zustand (Reset) in eine Normalbetriebsart übergeht. Im Verfahrensschritt 104 greift der Prozessor 12 lesend über das Bussystem 22, das interne Bussystem 40 und das Bussystem 24 auf den Arbeitsspeicher 14 zu. Beim Ausführen des Urladeprogramms können dynamische Daten im Arbeitsspeicher 14 gespeichert werden. Beim Ausführen der Befehle des Urladeprogramms werden zunächst die Programmbefehle des Urladeprogramms aus dem Anfangsbereich des Arbeitsspeichers 14 in den Endbereich des Arbeitsspeichers 14 kopiert. Anschließend führt der Prozessor mit Hilfe eines Sprungbefehls Befehle beginnend ab einer Adresse des Endbereiches aus. Beim Ausführen dieser Befehle wird das Betriebssystem über das serielle Interface 28, das interne Bussystem 40 und das Bussystem 24 in den Arbeitsspeicher 14 übertragen.

Das Betriebssystem 18 wird beginnend ab der Anfangsadresse des Arbeitsspeichers im Arbeitsspeicher 14 gespeichert, siehe Verfahrensschritt 106. Der Verfahrensschritt 106 bildet eine zweite Stufe des Startvorgangs. Die zweite Stufe wird auch als Nachlade-Übertragungsvorgang bezeichnet. In einem dem Verfahrensschritt 106 folgenden Verfahrensschritt 108 veranlasst die Startsteuerung 42, dass der Prozessor 12 in den Rücksetzzustand gesetzt wird und erneut mit der Ausführung von Befehlen am Anfang des Arbeitsspeichers 14 beginnt. Damit wird das Betriebssystem der Datenverarbeitungsanlage 10 aufgerufen, z.B. das Betriebssystem WINDOWS. Das Verfahren zum Neustart der Datenverarbeitungsanlage ist in einem Verfahrensschritt 110 beendet.

Bei einem anderen Ausführungsbeispiel ist das Betriebssystem im Nachladespeicher 18 in komprimierter Form gespeichert. Im Nachladespeicher 18 ist außerdem ein Dekomprimierungsprogramm gespeichert. Die Verfahrensschritte 100 bis 104 werden so wie beim ersten Ausführungsbeispiel ausgeführt. Im Verfahrensschritt 106 wird jedoch das Dekomprimierungsprogramm aus dem Nachladespeicher 18 in den Arbeitsspeicher 14 kopiert und zwar beginnend am Anfang des Arbeitsspeichers 14. Anschließend wird in einem dem Verfahrensschritt 106 folgenden Verfahrensschritt 107 der Prozessor 12 durch die Startsteuerung 42 zurückgesetzt.

Der Prozessor 12 beginnt anschließend erneut mit der Ausführung von Befehlen ab der Anfangsadresse des Arbeitsspeichers 14. Bei der Ausführung dieser Programmbefehle wird das Dekomprimierungsprogramm aus dem Anfangsbereich des Arbeitsspeichers 14 in dessen Endbereich kopiert. Der Prozessor 12 setzt aufgrund eines Sprungbefehles nach diesem Kopiervorgang die Befehlsausführung im Endbereich des Arbeitsspeichers 14 fort. Beim Ausführen der Befehle des Dekomprimierprogramms wird das komprimierte Betriebssystem in einem Verfahrensschritt 107 aus dem Nachladespeicher 18 gelesen, entkomprimiert und in unkomprimierter Form im Arbeitsspeicher 14 beginnend an dessen Anfangsadresse gespeichert. Das Kopieren des Betriebssystems ist eine dritte Stufe des Neustarts.

Nach dem Verfahrensschritt 107 folgt der Verfahrensschritt 108 so, wie er oben erläutert worden ist. Im Verfahrensschritt 110 wird das Verfahren zum Neustart der Datenverarbeitungsanlage 10 dann beendet.

Figur 3 zeigt Speicherbereiche des Nachladespeichers 18, wie sie bei einem dritten Ausführungsbeispiel genutzt werden. In einem Dekomprimierbereich 150 ist beginnend ab einer Adresse ADRA das Dekomprimierungsprogramm in unkomprimierter Form gespeichert. In einem dem Dekomprimierungsbereich 150 folgenden Betriebssystembereich 152 ist das Betriebssystem beginnend an einer Adresse ADRB in komprimierter Form gespeichert. Der Dekomprimierbereich 150 und der Betriebssystembereich 152 bilden einen Auswahlbereich 154. Durch die Angabe der Adresse ADRA in einem Register des Nachladespeichers 18 wird der Auswahlbereich 154 als aktiver Speicherbereich ausgewählt. Aus dem aktuell aktiven Speicherbereich lassen sich Programmbefehle lesen. Ein Auswahlbereich 156 ist dagegen ohne Änderung des Inhaltes des Registers nicht lesbar. Der Auswahlbereich 156 enthält einen Dekomprimierbereich 158 zum Speichern einer neueren Version des Dekomprimierprogramms. Der Dekomprimierbereich 158 beginnt an einer Adresse ADRC. An den Dekomprimierbereich 158 schließt sich an einer Adresse ADRD ein Betriebssystembereich 160 an. Der Betriebssystembereich 160 liegt ebenfalls im Auswahlbereich 156 und dient zur Aufnahme einer neuen Version des Betriebssystems in komprimierter Form.

Soll eine neue Version des Betriebssystems auf der Datenverarbeitungsanlage 10 genutzt werden, so bleibt zunächst der Auswahlbereich 154 aktiv. Über eine Datenfernübertragung oder über eine lokale Datenübertragung, z.B. von einem Laufwerk der Datenverarbeitungsanlage 10 aus, wird in den Dekomprimierbereich 158 das gleiche Dekomprimierprogramm wie im Dekomprimierbereich 150 gespeichert. Liegt eine neuere Version des Kopierprogramms vor, so wird im Dekomprimierbereich 158 die neuere Version gespeichert. Anschließen wird im Betriebssystembereich 160 die neuere Version des Betriebssystems in komprimierter Form gespeichert. Nach diesem Speichervorgang wird im Register des Nachladespeichers 18 die Adresse ADRC als Startadresse des aktiven Bereiches eingetragen. Damit ist nun der Auswahlbereich 156 aktiv. Der Auswahlbereich 154 ist nicht mehr aktiv, d.h. aus ihm können keine Programmbefehle mehr gelesen werden. Anschließend wird auf der Rücksetzleitung 46 ein Rücksetzimpuls erzeugt. Das oben an Hand der Figur 2 erläuterte Verfahren zum Neustart wird ausgeführt, wobei auf den Auswahlbereich 156 zugegriffen wird. Dabei wird auch der Verfahrensschritt 107 ausgeführt. Tritt kein Fehler bei der Ausführung des Neustarts auf, so können die im Auswahlbereich 154 gespeicherten Programmbefehle gelöscht werden.

Tritt dagegen beim Ausführen der Verfahrensschritte beim Neustart ein Fehler auf, so wird der Registerinhalt des Nachladespeichers 18 verändert. Es wird wieder die Adresse ADRA eingetragen, d.h. es wird wieder auf den Auswahlbereich 156 umgeschaltet. Anschließend wird ein Rücksetzimpuls der Rücksetzleitung 46 zugeführt und die Datenverarbeitungsanlage wird so, wie oben erläutert, neu gestartet. Auf einer anderen Datenverarbeitungsanlage wird der Fehler im Programmcode des Komprimierprogramms des Betriebssystems gesucht und beseitigt. Anschließend wird das korrigierte Programm in den Dekomprimierbereich 156 bzw. in den Betriebssystemsbereich 160 übertragen. Danach wird so, wie oben an Hand der Figur 3 erläutert, auf den Auswahlbereich 156 umgeschaltet und ein Neustart ausgeführt.

### Bezugszeichenliste

- 10: Datenverarbeitungsanlage
- 12: Prozessor
- 14: Arbeitsspeicher
- 16: Urladespeicher
- 18: Nachladespeicher
- 20: ASIC
- 22, 24: Bussystem
- 26: IIC-Bussystem
- 28: serielles Interface
- 30: Prozessor-Schnittstelle
- 32: Controller-Einheit
- 34: Urladespeicher-Schnittstelleneinheit
- 36: Nachladespeicher-Schnittstelleneinheit
- 38: Steuereinheit
- 40: internes Bussystem
- 42: Startsteuerung
- 44: Buszugriffsschaltung
- 46: Rücksetzleitung
- 100: Start
- 102: automatisches Kopieren des EEPROM-Inhalts in SDRAM (BootFW)
- 104: Start des Prozessors mit BootFW aus dem SDRAM
- 106: Kopieren des MMC-Inhaltes in den SDRAM (SW) + (Neustart)
- 107: gegebenenfalls Dekomprimieren des MMC-Inhaltes
- 108: Neustart des Prozessors mit SW
- 110: Ende
- 150: Dekomprimierbereich
- 152: Betriebssystembereich
- ADRA bis ADRD: Adresse
- 154, 156: Auswahlbereich
- 158: Dekomprimierbereich
- 160: Betriebssystembereich

## Patentansprüche

1. Verfahren zum Starten einer Datenverarbeitungsanlage (10), bei dem Programmbefehle eines Urladeprogramms in einer Urlade-Speichereinheit (16) gespeichert sind,
bei dem in einem Urlade-Übertragungsvorgang (102) erste Programmbefehle des Urladeprogramms aus der Urlade-Speichereinheit (16) mit Hilfe einer Steuerschaltung (20) in einen Anfangsbereich einer Arbeitsspeichereinheit (14) übertragen werden, bei dem
ein Prozessor (12) nach dem Urlade-Übertragungsvorgang (102) die ersten Programmbefehle des Urladeprogramms vom Anfangsbereich in einen Endbereich der Arbeitsspeichereinheit (14) kopiert und anschließend mit dem Ausführen der in den Endbereich der Arbeitsspeichereinheit (14) während des Urlade-Übertragungsvorgangs (102) übertragenen ersten Programmbefehle beginnt, wobei ein Nachlade-Übertragungsvorgang zum Übertragen von zweiten Programmbefehlen aus einer Nachlade-Speichereinheit (18) in den Anfangsbereich der Arbeitsspeichereinheit (14) ausgeführt wird, bei dem
die übertragenen zweiten Programmbefehle infolge eines Rücksetzens des Prozessors (12) im Anfangsbereich der Arbeitsspeichereinheit (14) ausgeführt werden, und bei dem auf die Urlade-Speichereinheit (16) und/oder die Nachlade-Speichereinheit (18) seriell oder mit mehreren Lesezugriffen zum Lesen eines Programmbefehls des Prozessors (12) zugegriffen wird.

2. Verfahren nach Anspruch 1,
**dadurch gekennzeichnet,**
**dass** die Steuereinheit (20) eine binäre Steuereinheit ist, bei der die Steuerfunktion durch die Verschaltung von Logikschaltungen vorgegeben ist,
oder dass die Steuereinheit (20) in einem anwenderspezifischen vorzugsweisen integrierten Schaltkreis enthalten ist, bei dem logische Schaltungselemente in einem Programmiervorgang durch Vorgaben des Anwenders verschaltet worden sind.

3. Verfahren nach Anspruch 1 oder 2,
**dadurch gekennzeichnet,**
**dass** der Prozessor (12) während des Urlade-Übertragungsvorgangs (102) durch die Steuereinheit (20) in einem Zustand gehalten wird, in welchem keine Befehle ausgeführt werden, und
**dass** die Steuereinheit (20) das Ausführen von Befehlen nach dem Urlade-Übertragungsvorgang (102) freigibt.

4. Verfahren nach Anspruch 3,
**dadurch gekennzeichnet,**
**dass** der Zustand des Prozessors, in dem die Steuereinheit (20) den Prozessor (12) während des Urlade-Übertragungsvorgangs (102) hält, einen rückgesetzten Zustand darstellt, und dass die Freigabe des Ausführens von Befehlen nach dem Urlade-Übertragungsvorgang (102) durch Umschalten eines Rücksetzsignals erfolgt.

5. Verfahren nach einem der vorhergehenden Ansprüche,
**dadurch gekennzeichnet,**
**dass** die Urlade-Speichereinheit (16) die Programmbefehle auch bei Wegfall einer Versorgungsspannung der Speichereinheit (16) speichert,
und/oder dass die Urlade-Speichereinheit (16) ein EEPROM ist.

6. Verfahren nach einem der vorhergehenden Ansprüche,
**dadurch gekennzeichnet,**
**dass** die Speicherkapazität der Urlade-Speichereinheit (16) im Kilobyte-Bereich liegt.

7. Verfahren nach einem der vorhergehenden Ansprüche,
**dadurch gekennzeichnet,**
**dass** die Arbeitsspeichereinheit (14) eine gleichzeitige Eingabe und/oder eine gleichzeitige Ausgabe mehrerer Bitpositionen eines Programmbefehls ermöglicht.

8. Verfahren nach einem der vorhergehenden Ansprüche,
**dadurch gekennzeichnet,**
**dass** die Nachlade-Speichereinheit (18) die zweiten Programmbefehle auch bei Wegfall einer Versorgungsspannung der Speichereinheit (18) speichert,
und/oder dass die Speichereinheit eine sogenannte Multimediakarte und/oder eine Kompakt-Flash-Karte und/oder eine Smartmediakarte und/oder eine Memory-Stick-Speichereinheit enthält.

9. Verfahren nach einem der vorhergehenden Ansprüche,
**dadurch gekennzeichnet,**
**dass** die Speicherkapazität der Nachlade-Speichereinheit (18) im Megabyte-Bereich liegt.

10. Verfahren nach einem der vorhergehenden Ansprüche,
**dadurch gekennzeichnet,**
**dass** die Nachlade-Speichereinheit (18) ein Register enthält, in welchem die Startadresse (ADRA) eines derzeit lesbaren Speicherbereichs (154) von mindestens zwei Speicherbereichen (154, 156) der Nachlade-Speichereinheit (18) vermerkt ist, und dass beim Ausführen des Urladeprogramms der Übertragungsvorgang abhängig von der Startadresse (ADRA) ausgeführt wird.

11. Verfahren nach Anspruch 10,
**dadurch gekennzeichnet,**
**dass** Programmbefehle der Nachlade-Speichereinheit (18) ausgetauscht werden, indem:
- zunächst eine neue Version der Programmbefehle im aktuell nicht lesbaren Speicherbereich (156) der Nachlade-Speichereinheit (18) gespeichert wird,
- im Register die Adresse (ADRC) des anderen Speicherbereich (156) vermerkt wird,
- ein neuer Startvorgang eingeleitet wird,
- beim Auftreten von Fehlern in das Register der vor dem Einstellen des anderen Speicherbereichs (156) eingetragene Wert (ADRA) erneut eingetragen wird,
- und indem anschließend wieder ein Startvorgang eingeleitet wird.

12. Verfahren nach einem der vorhergehenden Ansprüche,
**dadurch gekennzeichnet,**
**dass** mindestens einmal beim Ausführen der in die Arbeitsspeichereinheit (14) übertragenen Programmbefehle die Adresse zumindest eines Teils dieser Programmbefehle geändert wird, wobei die Programmbefehle aus ihrem Ursprungsspeicherbereich in der Arbeitsspeichereinheit (14) in einen anderen Speicherbereich der Arbeitsspeichereinheit (14) verschoben werden,
**dass** der Prozessor (12) mit dem Ausführen der in dem anderen Speicherbereich gespeicherten Programmbefehle beginnt und die Übertragung von Programmbefehlen der Nachlade-Speichereinheit (18) in den Ursprungsbereich steuert, und
**dass** der Prozessor (12) nach dem Übertragungsvorgang in einen definierten Anfangszustand geschaltet wird.

13. Verfahren nach einem der vorhergehenden Ansprüche,
**dadurch gekennzeichnet,**
**dass** in der Nachlade-Speichereinheit (18) gespeicherte zweite Programmbefehle gemäß einem Komprimierungsverfahren komprimiert sind,
**dass** in einem Teil der ersten Programmbefehle der Urlade-Speichereinheit (16) oder in einem unkomprimierten Teil (150) der zweiten Programmbefehle der Nachlade-Speichereinheit (18) ein Dekomprimierungsverfahren hinterlegt ist, und
**dass** die komprimierten zweiten Programmbefehle (152) beim Ausführen der ersten bzw. zweiten Programmbefehle des Dekomprimierungsverfahrens dekomprimiert werden.

14. Verfahren nach Anspruch 12 und 13,
**dadurch gekennzeichnet,**
**dass** die ersten Programmbefehle für das Dekomprimierungsverfahren in der Urlade-Speichereinheit (16) gespeichert sind, dass nach dem Urlade-Übertragungsvorgang der Prozessor (12) in den definierten Anfangszustand gesetzt wird,
**dass** die Adresse zumindest eines Teils des Urlade-Programms durch Kopieren des Teils vor dem Nachlade-Übertragungsvorgang geändert wird,
**dass** beim Nachlade-Übertragungsvorgang Programmbefehle in den Ursprungsadressbereich gespeichert werden, und
**dass** nach dem Nachlade-Übertragungsvorgang der Prozessor (12) in den definierten Anfangszustand gesetzt wird.

15. Verfahren nach Anspruch 12 und 13,
**dadurch gekennzeichnet,**
**dass** die zweiten Programmbefehle für das Komprimierverfahren in der Nachlade-Speichereinheit (18) gespeichert sind,
**dass** nach dem Urlade-Übertragungsvorgang der Prozessor (12) in den definierten Anfangszustand gesetzt wird,
**dass** die Adresse zumindest eines Teils des Urladeprogramms durch Kopieren des Teils vor dem Nachlade-Übertragungsvorgang geändert wird,
**dass** in einer ersten Phase des Nachlade-Übertragungsvorgangs Programmbefehle (150) für das Dekomprimierungsverfahren in den Ursprungsadressbereich gespeichert werden,
**dass** nach der ersten Phase des Nachladeübertragungsvorgangs der Prozessor (12) in den definierten Anfangszustand gesetzt wird,
**dass** die Adresse zumindest eines Teils der Programmbefehle durch Kopieren des Teils für das Dekomprimierverfahren geändert wird,
**dass** in einer zweiten Phase des Nachladevorgangs Programmbefehle in den Ursprungsadressbereich gespeichert werden, und dass nach der zweiten Phase des Nachladevorgangs der Prozessor (12) erneut in den definierten Anfangszustand gesetzt wird.

16. Verfahren nach Anspruch 15,
**dadurch gekennzeichnet,**
**dass** es sich bei den in der zweiten Phase des Nachladevorgangs in den Ursprungsadressbereich gespeicherten Programmbefehlen um Programmbefehle eines Betriebssystems handelt.

17. Datenverarbeitungsanlage (10)
mit einem Prozessor (12) zum Ausführen von Programmbefehlen, mit einer Urlade-Speichereinheit (16) zum Speichern von ersten Programmbefehlen eines Urladeprogramms,
mit einer Nachlade-Speichereinheit (18) zum Speichern von zweiten Programmbefehlen, und
mit einer Steuerschaltung (20) durch die in einem Urlade-Übertragungsvorgang (102) die ersten Programmbefehle des Urladeprogramms aus der Urlade-Speichereinheit (16) in einen Anfangsbereich einer Arbeitsspeichereinheit (14) übertragen werden, bei dem
der Prozessor (12) derart ausgestaltet ist, dass nach dem Urlade-Übertragungsvorgang (102) die ersten Programmbefehle des Urladeprogramms vom Anfangsbereich in einen Endbereich der Arbeitsspeichereinheit (14) kopiert werden und anschließend mit dem Ausführen der in den Endbereich der Arbeitsspeichereinheit (14) während des Urlade-Übertragungsvorgangs (102) übertragenen ersten Programmbefehle begonnen wird, wobei ein Nachlade-Übertragungsvorgang zum Übertragen der zweiten Programmbefehle aus der Nachlade-Speichereinheit (18) in den Anfangsbereich der Arbeitsspeichereinheit (14) ausgeführt wird, bei dem
die übertragenen zweiten Programmbefehle infolge eines Rücksetzens des Prozessors (12) im Anfangsbereich der Arbeitsspeichereinheit (14) ausgeführt werden,
und bei dem
die Urlade-Speichereinheit (16) und/oder die Nachlade-Speichereinheit (18) eine Speichereinheit mit seriellem Datenzugriff oder eine Speichereinheit ist, die mehrere Lesezugriffe zum Lesen eines Programmbefehls des Prozessors (12) erfordert.

18. Datenverarbeitungsanlage (10) nach Anspruch 17,
**gekennzeichnet durch**
eine ohne Programm arbeitende Steuereinheit (20), die beim Einschalten der Datenverarbeitungsanlage (10) das Übertragen des Urladeprogramms aus der Urlade-Speichereinheit (16) in die Speichereinheit (14) steuert,
wobei die Urlade-Speichereinheit (16) die Bitpositionen der ersten Programmbefehle des Urladeprogramms seriell oder mit mehreren Lesevorgängen je Programmbefehl ausgibt.

19. Schaltungsanordnung (20),
mit einer Schnittstelle (30) zu einem Prozessor (12),
mit einer Schnittstelle (34) zu einer Urlade-Speichereinheit mit seriellem Datenzugriff oder zu einer Urlade-Speichereinheit, die mehrere Lesezugriffe zum Lesen eines Programmbefehls des Prozessors (12) erfordert,
mit einer Schnittstelle (36) zu einer Nachlade-Speichereinheit (18) mit seriellem Datenzugriff oder zu einer Nachlade-Speichereinheit, die mehrere Lesezugriffe zum Lesen eines Programmbefehls des Prozessors (12) erfordert,
mit einer Schnittstelle (32) zu einer Arbeitsspeichereinheit (14) mit parallelem Datenzugriff beim Lesen eines Programmbefehls,
und mit einer Steuereinheit (42),
- die auf ein Startsignal (46) hin einen Urlade-Übertragungsvorgang (102) zur Übertragung von ersten Programmbefehlen für den Prozessor (12) aus der Urlade-Speichereinheit (16) in einen Anfangsbereich der Arbeitsspeichereinheit (14) veranlasst,
- die nach dem Urlade-Übertragungsvorgang (102) die ersten Programmbefehle des Urladeprogramms vom Anfangsbereich in einen Endbereich der Arbeitsspeichereinheit (14) kopiert und das Ausführen der in den Endbereich der Arbeitsspeichereinheit (14) übertragenen ersten Programmbefehle durch den Prozessor (12) veranlasst (104), bei dem ein Nachlade-Übertragungsvorgang (106, 107) ausgeführt wird, in welchem zweite Programmbefehle aus der Nachlade-Speichereinheit (18) in den Anfangsbereich der Arbeitsspeichereinheit (14) übertragen werden,
- die ein Ausführen der übertragenen zweiten Programmbefehle im Anfangsbereich der Arbeitsspeichereinheit (14) infolge eines Rücksetzens des Prozessors (12) auslöst.

## Claims

1. Process for starting a data processing system (10) where program commands of a bootstrap program are stored in a bootstrap memory unit (16), where first program commands of the bootstrap program are transferred in a bootstrap transfer operation (102) from the bootstrap memory unit (16) with the aid of a control circuit (20) into a start region of a main memory unit (14), where a processor (12), after the bootstrap transfer operation (102), copies the first program commands of the bootstrap program from the start region into an end region of the main memory unit (14) and then begins executing the first program commands transferred into the end region of the main memory unit (14) during the bootstrap transfer operation (102), wherein a reload transfer operation for transferring second program commands from a reload memory unit (18) into the start region of the main memory (14) is executed, where the transferred second program commands, on account of a resetting of the processor (12), are executed in the start region of the main memory unit (14), and where the bootstrap memory unit (16) and/or the reload memory unit (18) is accessed in a serial manner or with a plurality of read access operations for reading a program command of the processor (12).

2. Process according to Claim 1, **characterized in that** the control unit (20) is a binary control unit, where the control function is predetermined by the interconnection of logic circuits, or **in that** the control unit (20) is included in a user-specific preferably integrated circuit where logic circuit elements have been interconnected in a programming operation by means of defaults of the user.

3. Process according to Claim 1 or 2, **characterized in that** during the bootstrap transfer operation (102) the processor (12) is kept by the control unit (20) in a state in which no commands are executed, and **in that** the control unit (20) enables the execution of commands after the bootstrap transfer operation (102).

4. Process according to Claim 3, **characterized in that** the state of the processor in which the control unit (20) keeps the processor (12) during the bootstrap transfer operation (102) represents a reset state, and **in that** the enabling of the execution of commands after the bootstrap transfer operation (102) is effected by changing over a reset signal.

5. Process according to one of the preceding claims, **characterized in that** the bootstrap memory unit (16) stores the program commands even if there is a failure of a supply voltage for the memory unit (16), and/or **in that** the bootstrap memory unit (16) is an EEPROM.

6. Process according to one of the preceding claims, **characterized in that** the memory capacity of the bootstrap memory unit (16) is in the kilobyte range.

7. Process according to one of the preceding claims, **characterized in that** the main memory unit (14) makes possible a simultaneous input and/or a simultaneous output of a plurality of bit positions of a program command.

8. Process according to one of the preceding claims, **characterized in that** the reload memory unit (18) stores the second program commands even if there is a failure of a supply voltage for the memory unit (18), and/or **in that** the memory unit includes a so-called multimedia card and/or a compact flash card and/or a smart media card and/or a memory stick memory unit.

9. Process according to one of the preceding claims, **characterized in that** the memory capacity of the reload memory unit (18) is in the megabyte range.

10. Process according to one of the preceding claims, **characterized in that** the reload memory unit (18) includes a register in which the start address (ADRA) of one currently readable memory region (154) from at least two memory regions (154, 156) in the reload memory unit (18) is noted, and **in that** when the bootstrap program is executed, the transfer operation is executed in dependence on the start address (ADRA).

11. Process according to Claim 10, **characterized in that** program commands of the reload memory unit (18) are replaced by:
- initially storing a new version of the program commands in the currently unreadable memory region (156) of the reload memory unit (18),
- noting in the register the address (ADRC) of the other memory region (156),
- initiating a new start operation,
- re-entering into the register the value (ADRA) entered before the other memory region (156) was set in the event of errors occurring,
- and then by initiating a start operation again.

12. Process according to one of the preceding claims, **characterized in that** at least once when executing the program commands transferred into the main memory unit (14), the address of at least one portion of said program commands is changed, wherein the program commands are moved from their original memory region in the main memory unit (14) into another memory region of the main memory unit (14), **in that** the processor (12) starts executing the program commands stored in the other memory region and controls the transfer of program commands of the reload memory unit (18) into the original region, and **in that** after the transfer operation the processor (12) is switched into a defined initial state.

13. Process according to one of the preceding claims, **characterized in that** second program commands stored in the reload memory unit (18) are compressed according to a compression process, **in that** a decompression process is stored in a portion of the first program commands in the bootstrap memory unit (16) or in an uncompressed portion (150) of the second program commands in the reload memory unit (18), and **in that** the compressed second program commands (152) are decompressed when the first or second program commands of the decompression process are executed.

14. Process according to Claim 12 and 13, **characterized in that** the first program commands for the decompression process are stored in the bootstrap memory unit (16), **in that** after the bootstrap transfer operation the processor (12) is set into the defined initial state, **in that** the address of at least one portion of the bootstrap program is changed by copying the portion before the reload transfer operation, **in that** during the reload transfer operation, program commands are stored in the original address region, and **in that** after the reload transfer operation the processor (12) is set into the defined initial state.

15. Process according to Claim 12 and 13, **characterized in that** the second program commands for the compression process are stored in the reload memory unit (18), **in that** after the reload transfer operation the processor (12) is set into the defined initial state, **in that** the address of at least one portion of the bootstrap program is changed by copying the portion before the reload transfer operation, **in that** in a first phase of the reload transfer operation, program commands (150) for the decompression process are stored in the original address region, **in that** after the first phase of the reload transfer operation, the processor (12) is set into the defined initial state, **in that** the address of at least one portion of the program commands is changed by copying the portion for the decompression process, **in that** in a second phase of the reload operation program commands are stored in the original address region, and **in that** after the second phase of the reload operation the processor (12) is set into the defined initial state once again.

16. Process according to Claim 15, **characterized in that** the program commands stored in the original address region in the second phase of the reload operation are program commands of an operating system.

17. Data processing system (10) including a processor (12) for executing program commands, a bootstrap memory unit (16) for storing first program commands of a bootstrap program, a reload memory unit (18) for storing second program commands and a control circuit (20) by means of which, in a bootstrap transfer operation (102), the first program commands of the bootstrap program are transferred from the bootstrap memory unit (16) into a start region of a main memory unit (14), where the processor (12) is developed in such a manner that after the bootstrap transfer operation (102) the first program commands of the bootstrap program are copied from the start region into an end region of the main memory unit (14) and then the execution of the first program commands transferred into the end region of the main memory unit (14) during the bootstrap transfer operation (102) is started, wherein a reload transfer operation is executed for transferring the second program commands from the reload memory unit (18) into the start region of the main memory unit (14), where the transferred second program commands due to a resetting of the processor (12) are executed in the start region of the main memory unit (14), and where the bootstrap memory unit (16) and/or the reload memory unit (18) is a memory unit with serial data access or a memory unit that requires a plurality of read access operations for reading a program command of the processor (12).

18. Data processing system (10) according to Claim 17, **characterized by** a control unit (20) that operates without a program and when the data processing system is switched on, controls the transferring of the bootstrap program from the bootstrap memory unit (16) into the memory unit (14), wherein the bootstrap memory unit (16) outputs the bit positions of the first program commands of the bootstrap program in a serial manner or with a plurality of read operations per program command.

19. Circuit arrangement (20), including an interface (30) to a processor (12), an interface (34) to a bootstrap memory unit with serial data access or to a bootstrap memory unit which requires a plurality of read access operations for reading a program command of the processor (12), an interface (36) to a reload memory unit (18) with serial data access or to a reload memory unit which requires a plurality of read access operations for reading a program command of the processor (12), an interface (32) to a main memory unit (14) with parallel data access when reading a program command, and a control unit (42),
- which, in response to a start signal (46), causes a bootstrap transfer operation (102) for transferring first program commands for the processor (12) from the bootstrap memory unit (16) into a start region of the main memory unit (14),
- which after the bootstrap transfer operation (102) copies the first program commands of the bootstrap program from the start region into and end region of the main memory unit (14) and causes the execution of the first program commands transferred into the end region of the main memory unit (14) by the processor (12), where a reload transfer operation (106, 107) is executed in which second program commands are transferred from the reload memory unit (18) into the start region of the main memory unit (14),
- which triggers execution of the transferred second program commands in the start region of the main memory unit (14) in response to a resetting of the processor (12).

## Revendications

1. Procédé de démarrage d'un appareil de traitement de données (10),
dans lequel des instructions de programme d'un programme d'amorçage sont enregistrées dans une unité de mémoire d'amorçage (16),
dans lequel, au cours d'une opération de transmission d'amorçage (102), des premières instructions de programme du programme d'amorçage sont transmises à partir de l'unité de mémoire d'amorçage (16) à l'aide d'un circuit de commande (20) dans une zone initiale d'une unité de mémoire de travail (14),
dans lequel, après l'opération de transmission d'amorçage (102), un processeur (12) copie les premières instructions de programme du programme d'amorçage de la zone initiale dans une zone finale de l'unité de mémoire de travail (14) et commence ensuite l'exécution des premières instructions de programme transmises dans la zone finale de l'unité de mémoire de travail (14) pendant l'opération de transmission d'amorçage (102), une opération de transmission de rechargement étant exécutée pour transmettre des deuxièmes instructions de programme d'une unité de mémoire de rechargement (18) dans la zone initiale de l'unité de mémoire de travail (14),
dans lequel les deuxièmes instructions de programme transmises sont exécutées suite à une réinitialisation du processeur (12) dans la partie initiale de l'unité de mémoire de travail (14), et
dans lequel on accède à l'unité de mémoire d'amorçage (16) et/ou l'unité de mémoire de rechargement (18) en série ou par plusieurs accès en lecture afin de lire une instruction de programme du processeur (12).

2. Procédé selon la revendication 1,
**caractérisé en ce**
**que** l'unité de commande (20) est une unité de commande binaire, dans laquelle la fonction de commande est spécifiée par le câblage de circuits logiques, ou
en ce que l'unité de commande (20) est contenue dans un circuit, de préférence intégré, spécifique à l'utilisateur, dans lequel des éléments de circuit logique ont été câblés au cours d'une opération de programmation par des spécifications de l'utilisateur.

3. Procédé selon la revendication 1 ou 2,
**caractérisé en ce**
**que** pendant l'opération de transmission d'amorçage (102), le processeur (12) est maintenu par l'unité de commande (20) dans un état dans lequel aucune instruction ne peut être exécutée, et
en ce que l'unité de commande (20) valide l'exécution d'instructions après l'opération de transmission d'amorçage (102).

4. Procédé selon la revendication 3,
**caractérisé en ce**
**que** l'état du processeur dans lequel l'unité de commande (20) maintient le processeur (12) pendant l'opération de transmission d'amorçage (102) représente un état réinitialisé, et
en ce que la validation de l'exécution d'instructions après l'opération de transmission d'amorçage (102) a lieu par commutation d'un signal de réinitialisation.

5. Procédé selon l'une quelconque des revendications précédentes,
**caractérisé en ce que** l'unité de mémoire d'amorçage (16) enregistre les instructions de programme également en cas d'absence d'une tension d'alimentation de l'unité de mémoire (16), et/ou
**en ce que** l'unité de mémoire d'amorçage (16) est une EEPROM.

6. Procédé selon l'une quelconque des revendications précédentes,
**caractérisé en ce**
**que** la capacité de mémoire de l'unité de mémoire d'amorçage (16) est de l'ordre du kilo-octet.

7. Procédé selon l'une quelconque des revendications précédentes,
**caractérisé en ce**
**que** l'unité de mémoire de travail (14) permet une entrée simultanée et/ou une sortie simultanée de plusieurs positions binaires d'une instruction de programme.

8. Procédé selon l'une quelconque des revendications précédentes,
**caractérisé en ce**
**que** l'unité de mémoire de rechargement (18) enregistre les deuxièmes instructions de programme même en cas d'absence d'une tension d'alimentation de l'unité de mémoire (18), et/ou
en ce que l'unité de mémoire contient une carte dite multimédia et/ou une carte Compact Flash et/ou une carte SmartMedia et/ou une unité de mémoire Memory Stick.

9. Procédé selon l'une quelconque des revendications précédentes,
**caractérisé en ce**
**que** la capacité de mémoire de l'unité de mémoire de rechargement (18) est de l'ordre du méga-octet.

10. Procédé selon l'une quelconque des revendications précédentes,
**caractérisé en ce**
**que** l'unité de mémoire de rechargement (18) contient un registre dans lequel est notée l'adresse de début (ADRA) d'une zone de mémoire (154) actuellement lisible parmi au moins deux zones de mémoire (154, 156) de l'unité de mémoire de rechargement (18), et
en ce que lors de l'exécution du programme d'amorçage, l'opération de transmission est exécutée en fonction de l'adresse de début (ADRA).

11. Procédé selon la revendication 10,
**caractérisé en ce**
**que** des instructions de programme de l'unité de mémoire de rechargement (18) sont remplacées en ce que :
- d'abord une nouvelle version des instructions de programme est enregistrée dans la zone de mémoire (156) actuellement non lisible de l'unité de mémoire de rechargement (18),
- l'adresse (ADRC) de l'autre zone de mémoire (156) est notée dans le registre,
- une nouvelle opération de démarrage est déclenchée,
- lorsque des erreurs apparaissent, la valeur (ADRA) inscrite avant la mise à disposition de l'autre zone de mémoire (156) est de nouveau inscrite dans le registre, et
- en ce qu'ensuite, une autre opération de démarrage est déclenchée.

12. Procédé selon l'une quelconque des revendications précédentes,
**caractérisé en ce**
**qu'**au moins une fois lors de l'exécution des instructions de programme transmises à l'unité de mémoire de travail (14), l'adresse d'au moins une partie de ces instructions de programme est modifiée, les instructions de programme étant déplacées de leur zone de mémoire d'origine dans l'unité de mémoire de travail (14) vers une autre zone de mémoire de l'unité de mémoire de travail (14),
en ce que le processeur (12) commence l'exécution des instructions de programme enregistrées dans l'autre zone de mémoire et commande la transmission d'instructions de programme de l'unité de mémoire de rechargement (18) dans la zone d'origine, et
en ce qu'après l'opération de transmission, le processeur (12) est commuté sur un état initial défini.

13. Procédé selon l'une quelconque des revendications précédentes,
**caractérisé en ce**
**que** des deuxièmes instructions de programme enregistrées dans l'unité de mémoire de rechargement (18) sont comprimées selon un procédé de compression,
en ce que dans une partie des premières instructions de programme de l'unité de mémoire d'amorçage (16) ou dans une partie non comprimée (150) des deuxièmes instructions de programme de l'unité de mémoire de rechargement (18), un procédé de décompression est mémorisé, et
en ce que les deuxièmes instructions de programme (152) comprimées sont décomprimées lors de l'exécution des premières ou deuxièmes instructions de programme du procédé de décompression.

14. Procédé selon les revendications 12 et 13,
**caractérisé en ce**
**que** les premières instructions de programme pour le procédé de décompression sont enregistrées dans l'unité de mémoire d'amorçage (16),
en ce qu'après l'opération de transmission d'amorçage, le processeur (12) est mis à l'état initial défini,
en ce que l'adresse d'au moins une partie du programme d'amorçage est modifiée par la copie de ladite partie avant l'opération de transmission de rechargement,
en ce qu'au cours de l'opération de transmission de rechargement, des instructions de programme sont enregistrées dans la zone d'adresse d'origine, et
en ce qu'après l'opération de transmission de rechargement, le processeur (12) est mis à l'état initial défini.

15. Procédé selon les revendications 12 et 13,
**caractérisé en ce**
**que** les deuxièmes instructions de programme sont enregistrées pour le procédé de compression dans l'unité de mémoire de rechargement (18),
en ce qu'après l'opération de transmission d'amorçage, le processeur (12) est mis à l'état initial défini,
en ce que l'adresse d'au moins une partie du programme d'amorçage est modifiée par la copie de ladite partie avant l'opération de transmission de rechargement,
en ce qu'au cours d'une première phase de l'opération de transmission de rechargement, des instructions de programme (150) sont enregistrées pour le procédé de décompression dans la zone d'adresse d'origine,
en ce qu'après la première phase de l'opération de transmission de rechargement, le processeur (12) est mis à l'état initial défini,
en ce que l'adresse d'au moins une partie des instructions de programme est modifiée par la copie de ladite partie pour le procédé de décompression,
en ce qu'au cours d'une deuxième phase de l'opération de rechargement, des instructions de programme sont enregistrées dans la zone d'adresse d'origine, et
en ce qu'après la deuxième phase de l'opération de rechargement, le processeur (12) est de nouveau mis à l'état initial défini.

16. Procédé selon la revendication 15,
**caractérisé en ce**
**que** les instructions de programme enregistrées au cours de la deuxième phase de l'opération de rechargement dans la zone d'adresse d'origine sont des instructions de programme d'un système d'exploitation.

17. Appareil de traitement de données (10),
comprenant un processeur (12) pour exécuter des instructions de programme,
une unité de mémoire d'amorçage (16) pour enregistrer des premières instructions de programme d'un programme d'amorçage,
une unité de mémoire de rechargement (18) pour enregistrer des deuxièmes instructions de programme, et
un circuit de commande (20) par lequel, au cours d'une opération de transmission d'amorçage (102), les premières instructions de programme du programme d'amorçage sont transmises de l'unité de mémoire d'amorçage (16) dans une zone initiale d'une unité de mémoire de travail (14),
dans lequel le processeur (12) est configuré de telle sorte qu'après l'opération de transmission d'amorçage (102), les premières instructions de programme du programme d'amorçage sont copiées de la zone initiale à une zone finale de l'unité de mémoire de travail (14), et qu'on commence ensuite l'exécution des premières instructions de rechargement transmises à la zone finale de l'unité de mémoire de travail (14) pendant l'opération de transmission d'amorçage (102), une opération de transmission de rechargement étant exécutée pour transmettre les deuxièmes instructions de programme de l'unité de mémoire de rechargement (18) à la zone initiale de l'unité de mémoire de travail (14),
dans lequel les deuxièmes instructions de programme transmises sont exécutées suite à une réinitialisation du processeur (12) dans la zone initiale de l'unité de mémoire de travail (14), et
dans lequel l'unité de mémoire d'amorçage (16) et/ou l'unité de mémoire de rechargement (18) est une unité de mémoire avec un accès série aux données ou une unité de mémoire qui nécessite plusieurs accès en lecture pour lire une instruction de programme du processeur (12).

18. Appareil de traitement de données (10) selon la revendication 17,
**caractérisé par**
une unité de commande (20) fonctionnant sans programme qui commande la transmission du programme d'amorçage de l'unité de mémoire d'amorçage (16) à l'unité de mémoire (14) lorsque l'appareil de traitement de données (10) est mis sous tension,
dans lequel l'unité de mémoire d'amorçage (16) délivre les positions binaires des premières instructions de programme du programme d'amorçage en série ou par plusieurs opérations de lecture pour chaque instruction de programme.

19. Système de circuits (20),
comprenant une interface (30) avec un processeur (12),
une interface (34) avec une unité de mémoire d'amorçage avec un accès série aux données ou avec une unité de mémoire d'amorçage nécessitant plusieurs accès en lecture pour lire ne instruction de programme du processeur (12), une interface (36) avec une unité de mémoire de rechargement (18) avec un accès série aux données ou avec une unité de mémoire de rechargement nécessitant plusieurs accès en lecture pour lire une instruction de programme du processeur (12),
une interface (32) avec une unité de mémoire de travail (14) avec un accès parallèle aux données lors de la lecture d'une instruction de programme, et
une unité de commande (42)
- qui provoque suite à un signal de départ (46) une opération de transmission d'amorçage (102) pour transmettre des premières instructions de programme pour le processeur (12) à partir de l'unité de mémoire d'amorçage (16) dans une zone initiale de l'unité de mémoire de travail (14),
- qui copie après l'opération de transmission d'amorçage (102) les premières instructions de programme du programme d'amorçage de la zone initiale dans une zone finale de l'unité de mémoire de travail (14) et provoque (104) l'exécution des premières instructions de programme transmises dans la zone finale de l'unité de mémoire de travail (14) par le processeur (12), dans lequel une opération de transmission de rechargement (106, 107) est exécutée, au cours de laquelle des deuxièmes instructions de programme sont transmises de l'unité de mémoire de rechargement (18) dans la zone initiale de l'unité de mémoire de travail (14),
- qui déclenche une exécution des deuxièmes instructions de programme transmises dans la zone initiale de l'unité de mémoire de travail (14) suite à une réinitialisation du processeur (12).
